# EUROPÄISCHE PATENTANMELDUNG

(11) **EP 2 508 369 A1**
(43) Veröffentlichungstag der Anmeldung: **10.10.2012**
(21) Anmeldenummer: 12002188.6
(22) Anmeldetag: 27.03.2012
(51) Int. Cl.: B60H 1/00

(54) **Klimatisierung eines Innenraums eines Fahrzeugs unter Einsatz einer Lufteinstelleinrichtung**

(30) Priorität: 05.04.2011 DE 102011016101
(71) Anmelder: Volkswagen Aktiengesellschaft, 38440 Wolfsburg (DE)
(72) Erfinder: Schmitt, Stefan, 38458 Velpke (DE); Grimke, Dirk, 29399 Wahrenholz (DE)

(57) **Zusammenfassung**

Bei der Vorrichtung zur Klimatisierung eines Innenraums eines Fahrzeugs mit einer Luft ansaugenden Gebläseeinrichtung (2) einem Luftzufuhrsystem, welches mit dem Innenraum verbindbar ist und einen Luftzufuhrkanal (3) sowie zumindest einen Frischluftkanal (4) und einen Umluftkanal (5) umfasst, wobei der Frischluftkanal (4) und der Umluftkanal (5) mit einem vorderen Bereich (3a) des Luftzufuhrkanals (3) verbindbar oder verbunden sind, -einer mit einer im hinteren Bereich (3b) des Luftzufuhrkanals (3) verbundenen oder verbindbaren Heizungswärmetauschereinrichtung (6) und einer stromaufwärts der Heizungswärmetauschereinrichtung (6) im Luftzufuhrkanal (3) angeordneten Temperierkomponente (7) einer Verdampfereinrichtung, ist vorgesehen, dass stromaufwärts der Temperierkomponente (7) im Luftzufuhrkanal (3) eine Lufteinstellelnrichtung angeordnet ist, mittels der ein ausschließlich aus dem Umluftkanal (5) geförderter Umluftmassenstrom (5a) unter strömungsmäßiger Beaufschlagung der Temperierkomponente (7) und gleichzeitig ein zumindest teilweise aus dem Frischluftkanal (4) geförderter Frischluftmassenstrom (4a) unter strömungsmäßiger Umgehung der Temperierkomponente (7) der Heizungswärmetauschereinrichtung (6) zuführbar ist. Die Erfindung umfasst ferner ein Verfahren zur Klimatisierung eines Innenraums eines Fahrzeugs.

## Beschreibung

Die Erfindung betrifft eine Vorrichtung sowie ein Verfahren zur Klimatisierung eines Innenraums eines Fahrzeugs, jeweils gemäß den Merkmalen der Oberbegriffe der unabhängigen Patentansprüche.

Klimatisierungsvorrichtungen von Fahrzeugen mit einer Luft ansaugenden Gebläseeinrichtung eines Luftzuführsystems, welches mit einem Innenraum des Fahrzeugs verbindbar ist und einen Luftzufuhrkanal sowie zumindest einen Frischluftkanal und einen Umluftkanal umfasst, sind beispielsweise aus der DE 196 51 279 B4 bekannt. Mit einem hinteren Bereich des Luftzufuhrkanals ist dabei eine Heizungswärmetauschereinrichtung verbunden, wobei stromaufwärts der Heizungswärmetauschereinrichtung im Luftzufuhrkanal eine Temperierkomponente einer Verdampfereinrichtung einer Klimaanlage angeordnet ist. Üblich ist dabei die Mischung von Umluft-und Frischluftmassenströmen vor der Temperierkomponente, wie es beispielsweise in der EP 1 787 838 A1 beschrieben ist. Die Mischung von Umluft- und Frischluftmassenstrom vor der Temperierkomponente resultiert in einem relativ hohen Energieverbrauch, da unabhängig von der Temperatur und Feuchte der einzelnen zugeführten Luftmassenströme mittels der Temperierkomponente eine Abkühlung des gesamten Luftmassenstroms auf eine gemeinsame Temperatur von beispielsweise 10 °C erfolgt, der in Hinblick auf die bei modernen Fahrzeugen angestrebte hohe Energieeffizienz, beispielsweise im Teillastbereich von mit einer Brennkraftmaschine betriebenen Fahrzeugen von der Anmelderin als zu hoch angesehen wird. Es versteht sich, dass ein derartiges Problem einer zu geringen energetischen Effizienz bei Elektro-oder Hybridfahrzeugen aufgrund deren Abhängigkeit von elektrischen Energiespeichersystemen noch stärker ausgeprägt ist.

Aus der DE 196 51 279 B4 ist bereits eine Klimaanlage für ein Fahrzeug bekannt mit einem Außenluft-Ansaugeinlass und einem Innenluft-Ansaugeinlass zum Ansaugen von Außenluft bzw. Innenluft sowie eine Defroster-Öffnung sowie eine Fußraumöffnung zum Ausblasen von Luft. Ferner ist ein erster Luftkanal, der von dem Außenluft-Ansaugeinlass aus zur Defroster-Öffnung hin ausgebildet ist, und ein zweiter Luftkanal, der vom Innenluft-Ansaugeinlass aus zur Fußraumöffnung hin ausgebildet ist, vorgesehen. Für eine bedarfsgerechte Zuführung von Luft mit einer geringen Luftfeuchte kann Innen- oder Außenluft mit Hilfe eines Entfeuchtungsmittels entfeuchtet werden, wobei Außen- und Innenluft mit einem ersten bzw. zweiten Lüfter zu einem Verdampfer gefördert werden können und die Lüfter durch den gleichen Gebläsemotor angetrieben werden. Für eine unterschiedliche Entfeuchtung von Außen- und Innenluft ist dabei neben dem erwähnten Entfeuchtungsmittel die Ausbildung von separaten Luftkanälen der Klimaanlage im Bereich des Verdampfers sowie des Heiz-Wärmetauschers erforderlich.

Aufgabe der vorliegenden Erfindung ist es, auf eine einfache Weise eine bedarfsgerechte und in Hinblick auf den Energieeinsatz effiziente Temperierung und Entfeuchtung von Frischluft- und Umluft zur Klimatisierung eines Innenraums eines Fahrzeugs zur Verfügung zu stellen.

Die Aufgabe wird erfindungsgemäß mit den Merkmalen der unabhängigen Patentansprüche gelöst. Vorteilhafte Ausführungsformen der Erfindung sind in den abhängigen Ansprüchen zusammengefasst.

Die erfindungsgemäße Vorrichtung zur Klimatisierung eines Innenraums eines Fahrzeugs mit einer Luft ansaugenden Gebläseelnrichtung, einem Luftzufuhrsystem, welches mit dem Innenraum verbindbar ist und einen Luftzufuhrkanal sowie zumindest einen Frischluftkanal und einen Umluftkanal umfasst, wobei der Frischluftkanal und der Umluftkanal mit einem vorderen Bereich des Luftzufuhrkanals verbindbar oder verbunden sind, einer im hinteren Bereich des Luftzufuhrkanals verbundenen oder verbindbaren Heizungswärmetauschereinrichtung und einer stromabwärts der Heizungswärmetauschereinrichtung im Luftzufuhrkanal angeordneten Temperierkomponente einer Verdampfereinrichtung, vorzugsweise einer Klimaanlage des Fahrzeugs, zeichnet sich dadurch aus, dass stromaufwärts der Temperierkomponente im Luftzufuhrkanal eine Lufteinstelleinrichtung angeordnet ist, mittels der ein ausschließlich aus dem Umluftkanal geförderter Umluftmassenstrom unter strömungsmäßiger Beaufschlagung der Temperierkomponente und gleichzeitig ein zumindest teilweise aus dem Frischluftkanal geförderter Frischluftmassenstrom unter strömungsmäßiger Umgehung der Temperierkomponente über den Luftzufuhrkanal der Heizungswärmetauschereinrichtung zuführbar ist. Der Ausdruck "strömungsmäßig" bezieht sich in diesem Text auf einen Luftmassenstrom mit bei Klimatisierungsanwendungen bei Fahrzeugen typischen Geschwindigkeits-, Dichte-, Temperatur- und Luftfeuchtewerten.

Die vorzugsweise eingesetzte Klimaanlage weist, wie an sich bekannt ist, einen von einem Kältemittel durchströmbaren Kältemittelkreislauf auf. Typischerweise ist bei einem mit einem Verbrennungsmotor betriebenem Fahrzeug, dem Kälteanlagenkreislauf ein Kompressor und zumindest ein Außenwärmeübertrager, zumindest ein Innenwärmeübertrager, insbesondere in Form einer Verdampfereinrichtung und optional, bevorzugt für den Fall einer als Wärmepumpe betreibbaren Klimaanlage ein oder mehrere weitere Wärmetauscher zugeordnet, wobei es sich versteht, dass an sich auch andere Ausführungsformen einer Klimaanlage von der Erfindung mit umfasst sind.

Bei strömungsmäßiger Beaufschlagung der Temperierkomponente der Verdampfereinrichtung ist, wie an sich bekannt, das Kältemittel der Klimaanlage thermisch mit dem die Temperierkomponente beaufschlagenden Luftmassenstrom gekoppelt. Die Temperlerkomponente weist eine möglichst große Temperierfläche auf, um in Abhängigkeit von dem Zustand des die Temperierkomponente beaufschlagenden Luftmassenstroms diesen zu kühlen oder zu erwärmen. Bei strömungsmäßiger Umgehung der Temperierkomponente der Verdampfereinrichtung ist das Kältemittel der Klimaanlage thermisch von dem entsprechenden Luftmassenstrom entkoppelt. Da mittels der Luftstelleinrichtung ein ausschließlich aus dem Umluftkanal geförderter Umluftmassenstrom unter strömungsmäßiger Beaufschlagung der Temperierkomponente zugeführt werden und gleichzeitig ein zumindest teilweise aus dem Frischluftkanal geförderter Frischluftmassenstrom unter strömungsmäßiger Umgehung der Temperierkomponente der Heizungswärmetauschereinrichtung zugeführt werden kann, kann im Heizfall, bspw. im Winter, bei gleichem Energieeinsatz eine höhere Menge an Umluft entfeuchtet werden, als bei einer Mischung von Frischluft und Umluft vor der Temperierkomponente. Somit kann auch der relative Anteil von Umluft am gesamten im Luftzufuhrkanal geförderten Luftmassenstrom im Heizfall ohne Scheibenbeschlag erhöht werden. Im Kühlfall, bspw. im Sommerbetrieb, ist es nicht erforderlich, den gesamten, also aus Umluft und Frischluft bestehenden Luftmassenstrom, abzukühlen, sondern nur einen Luftmassenstrom, der notwendig ist, um eine gewünschte Ausblastemperatur unter Einbeziehung des Heizungswärmetauschers zu erreichen. Da stromabwärts der Temperierkomponente der abgekühlten Luft wärmere, ungekühlte Luft beigemischt werden kann, kann der Einsatz von Energie zum Nachheizen vermieden oder zumindest reduziert werden, so dass ein insbesondere bei Elektro- und Hybridfahrzeugen relevanter energetischer Effizienzvorteil erreicht werden kann. Da lediglich ein Teil des gesamten Luftmassenstroms über die Temperierkomponente geleitet und entfeuchtet wird, lassen sich, insbesondere im Sommerbetrieb, höhere Luftfeuchten als bisher im Innenraum des Fahrzeugs darstellen.

Eine weitere Ausführungsform der Erfindung zeichnet sich dadurch aus, dass die Lufteinstelleinrichtung einen die Temperierkomponente strömungsmäßig umgehenden Bypasskanal des Luftzufuhrkanals umfasst. Insbesondere kann der Bypasskanal bei einer In den Luftzufuhrkanal hineinragenden Temperierkomponente gebildet sein durch einen nicht von der Temperierkomponente eingenommenen Bereich des Luftzufuhrkanals, womit der Bypasskanal konstruktiv besonders einfach verwirklicht ist.

Eine weitere Ausführungsform der Erfindung zeichnet sich dadurch aus, dass die Lufteinstelleinrichtung zumindest eine im Luftzufuhrkanal angeordnete verstellbare Klappe umfasst, mittels welcher der Bypasskanal In einen für einen Umluftmassenstrom verschlossenen und für einen Frischluftmassenstrom offenen Zustand bringbar ist. Eine derartige Klappe kann vorteilhaft mit geringem konstruktivem Aufwand verwirklicht werden. Die Klappe kann vorteilhaft schwenkbar an einer an der Temperierkomponente angeordnete Schwenkachse angebracht sein. In dem für den Umluftmassenstrom verschlossenen Zustand des Bypass kann die Klappe mit einer Trennwand zwischen Frischluftkanal und Umluftkanal zusammenwirken und in diesem Zustand eine Verlängerung der Trennwand bilden, so dass sich ein Frischluftpfad bis in den von der Temperierkomponente freien Bereich des Luftzufuhrkanals, erstreckt, wobei sich gleichzeitig ein Umluftpfad bis zur Temperierkomponente erstreckt.

Weiter bevorzugt kann die Schwenkachse der Klappe auch beabstandet von der Temperierkomponente angeordnet sein, wobei dann vorteilhalterweise die Trennwand im Bereich der Ausbildung der Klappe lediglich unterbrochen ist und stromabwärtig der Klappe bis zur Temperierkomponente weitergeführt wird. Mittels dieser Anordnung kann gegebenenfalls strömungstechnisch schon weiter vor der Temperierkomponente für eine ausreichende Durchmischung von Umluft und Frischenluft gesorgt werden. Dies betrifft insbesondere den Betriebsfall, in welchem der Bypasskanal nahezu oder vollständig verschlossen ist.

Eine weitere Ausführungsform der Erfindung zeichnet sich dadurch aus, dass die Temperierkomponente mit einem Frischluftteilmassenstrom beaufschlagbar ist, wobei gleichzeitig der Bypasskanal in einen für einen Umluftmassenstrom verschlossenen Zustand versetzt ist, so dass vorteilhaft die Möglichkeit einer bedarfsgerechten Temperierung und Entfeuchtung der verschiedenen Luftmassenströme im Luftzufuhrkanal verbessert wird.

Eine weitere Ausführungsform der Erfindung zeichnet sich dadurch aus, dass mittels der Klappe der Bypasskanal in einen für einen Umluftmassenstrom und für einen Frischluftmassenstrom geschlossenen Zustand bringbar ist, womit vorteilhaft auch die an sich aus dem Stand der Technik bekannte Beaufschlagung der Temperierkomponente mit dem gesamten angesaugten, Frischluft und Umluft umfassenden Luftmassenstrom mit der erfindungsgemäßen Vorrichtung realisiert werden kann.

Eine weitere Ausführungsform der Erfindung zeichnet sich dadurch aus, dass mittels der Klappe der Bypasskanal in einen für einen Umluftmassenstrom und für einen Frischluftmassenstrom offenen Zustand bringbar Ist, womit vorteilhaft eine weitere Einstellmöglichkeit hinsichtlich der Temperierung und Entfeuchtung der Luftmassenströme verwirklicht ist.

Eine weitere Ausführungsform der Erfindung zeichnet sich dadurch aus, dass die Temperier-komponente mit einem Umluttteilluftmassenstrom beaufschlagbar ist, wobei die Temperierkomponente von einem aus dem Frischluftkanal gefördertem Frischluftmassenstrom nicht beaufschlagbar ist.

Eine weitere Ausführungsform der Erfindung zeichnet sich dadurch aus, dass die Gebläseeinrichtung im Luftzufuhrkanal stromabwärts oder stromaufwärts der Temperierkomponente angeordnet oder anordenbar ist, wodurch ein Platz sparendes Packaging erreicht wird.

Eine weitere Ausführungsform der Erfindung zeichnet sich dadurch aus, dass die Gebläseeinrichtung eine erste im Frischluftkanal oder eine zweite im Umluftkanal angeordnete Gebläsekomponente aufweist, womit vorteilhaft die beförderten Luftmassenströme im Frischluftkanal bzw. Umluftkanal unterschiedlich eingestellt werden können.

Die Vorrichtung ist gemäß einer weiteren Ausführungsform der Erfindung mittels der Verdampfereinrichtung und/oder der Heizungswärmetauschereinrichtung an eine an sich bekannte Klimaanlage gekoppelt, die einen Kälteanlagen- und/oder einem Wärmepumpenkreislauf umfassen kann.

Das erfindungsgemäße Verfahren zur Klimatisierung eines Innenraums eines Fahrzeugs mittels einer Luft ansaugenden Gebläseeinrichtung, eines Luftzufuhrsystems, welches mit dem Innenraum verbindbar ist und einen. Luftzufuhrkanal sowie zumindest einen Frischluftkanal und einen Umluftkanal umfasst, wobei der Frischluftkanal und der Umluftkanal mit einem vorderen Bereich des Luftzufuhrkanals verbindbar oder verbunden sind, einer mit einer im hinteren Bereich des Luftzufuhrkanals verbundenen oder verbindbaren Heizungswärmetauschereinrichtung und einer stromaufwärts der Heizungswärmetauschereinrichtung im Luftzufuhrkanal angeordneten Temperierkomponente einer Verdampfereinrichtung, vorzugsweise einer Klimaanlage des Fahrzeugs zeichnet sich dadurch aus, dass mittels einer stromaufwärts der Temperierkomponente im Luftzufuhrkanal angeordneten Lufteinstelleinrichtung ein ausschließlich aus dem Umluftkanal geförderter Umluftmassenstrom unter strömungsmäßiger Beaufschlagung der Temperierkomponente und gleichzeitig ein zumindest teilweise aus dem Frischluftkanal geförderter Frischluftmassenstrom unter strömungsmäßiger Umgehung der Temperierkomponente der Heizungswärmetauschereinrichtung zugeführt wird.

Das erfindungsgemäße Verfahren weist die bereits im Zusammenhang mit der erfindungsgemäßen Vorrichtung beschriebenen technischen Vorteile auf.

Die Verdampfereinrichtung kann Klimaanlagen zugeordnet sein, die in einem Kälteanlagen-und/oder Wärmepumpenbetrieb betrieben werden.

In Abhängigkeit von der Außentemperatur ermöglicht die Erfindung eine Optimierung des Energieeinsatzes bei der Klimatisierung des Innenraums eines Fahrzeugs, wie sich aus den folgenden Rechenbelspielen für typische Szenarien eines Kälteleistungsbedarfs ergibt. Dabei soll ein Luftmassenstrom von 250 kg/h von 25 °C bei einer relativen Feuchte von 50% auf eine Temperatur von 14 °C temperiert werden. Bei einer Klimatisierungsvorrichtung nach dem Stand der Technik wird dazu der gesamte Luftmassenstrom auf 10 °C von der Temperiervorrichtung abgekühlt und anschließend wieder auf 14 °C von einer Heizeinrichtung erwärmt, wozu insgesamt ein Kälteleisturigsbedarf von 1,74 kW bei typischen Klimatisierungsbedingungen erforderlich ist. Wird erfindungsgemäß nur ein Teil des Luftmassenstroms gekühlt und ein anderer Teil über den Bypass gelenkt, ergibt sich ein Kälteleistungsbedarf von 1,07 kW.

In einem weiteren Szenario wird Frischluft mit einer Temperatur von -5 °C und 80% relativer Luftfeuchte und Umluft mit einer Temperatur von 15 °C und 60% relativer Luftfeuchte zu gleichen Teilen (50% Frischluft und 50% Umluft) gemischt. Dabei ergibt sich eine Temperatur der gemischten Luft von 5 °C bei einem Taupunkt von ca. 1,5 °C. Bei einer derartigen Temperatur des gemischten Luftstroms von 5 °C ist eine Entfeuchtung mittels einer Verdampfereinrichtung kaum noch möglich. Wenn erfindungsgemäß eine Mischung von Frischluft und Umluft erst nach erfolgter Entfeuchtung der Umluft vorgenommen wird, ist die Entfeuchtung einfacher durchzuführen. Ferner kann man bei Einsatz eines Kältemiftelkreislaufs, der in einem Wärmepumpenbetrieb betrieben wird, eine Rückgewinnung von Wärme aus Luft in das Kältemittel erreichen. Für einen Luftmassenstrom von 200 kW/h und 50% Umluft ergibt sich, dass 0,5 kW Leistung in das Kältemittel eingespeist werden können.

Im Winterbetrieb wird der Strömungswiderstand im Luftzufuhrsystem im Heizbetrieb reduziert, da ein Teil des Luftmassenstroms um die Temperierkomponente herum gelenkt wird, also die Temperierkomponente nicht von dem gesamten Luftmassenstrom beaufschlagt wird. Für mittels eines Verbrennungsmotors betriebene Fahrzeuge kann vorteilhaft auch bei einer in einem Kälteanlagenbetrieb betriebenen Klimaanlage die Umlenkung von Frischluft um die Temperierkomponente herum, insbesondere bei einer Außentemperatur < 2°C und einer Temperatur der Umlauf >2°C eingesetzt werden, da die am Kondensator (Außenwärmetauscher) anfallende Leistung und damit dem vom Motor dem Kompressor zuzuführende Leistung reduziert werden kann. Die gewählten Grenzwerte von 2°C sind dabei insbesondere einem Schutz der Verdampfereinrichtung vor Vereisung geschuldet. Bei einer in einem Wärmepumpenbetrieb betriebenen Klimaanlage wird der bei Beaufschlagung der Temperierkomponente mit warmer Umluft der Saugdruck Im Kältemittelkreislauf stromabwärts der Temperierkomponente erhöht und damit unter Vermeidung einer Vereisung des Außenwärmetauschers eine Erhöhung der Kompressorleistung möglich.

Im Sommerbetrieb kann vorteilhaft die Luftfeuchte im Innenraum erhöht werden, da die Temperierfläche nur mit einem Teil des gesamten Luftmassenstroms beaufschlagt und daher nur dieser Teil abgekühlt und entfeuchtet wird. Ferner kann ohne Einsatz einer zusätzlichen Wärmequelle durch die wärmere Frischluft die abgekühlte Umluft wieder erwärmt werden und damit eine bei insbesondere Elektrofahrzeugen oder Hybridfahrzeugen relevante Reheat-Funktion verwirklicht werden.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder dargestellte Merkmale bilden für sich oder in beliebiger sinnvoller Kombination die Erfindung, gegebenenfalls auch unabhängig von den Ansprüchen und können insbesondere auch Gegenstand einer oder mehrerer separater Erfindungen sein. Gleiche, ähnliche und/oder zumindest gleiche Teile sind mit Bezugszeichen versehen.

Es zeigen
Figur 1
   eine erfindungsgemäße Vorrichtung zur Klimatisierung mit einem geschlossenen Bypass
Figur 2
   eine erfindungsgemäße Vorrichtung zur Klimatisierung mit einem für Frischluft geöffneten und für Umluft geschlossenen Bypass
Figur 3
   eine erfindungsgemäße Vorrichtung zur Klimatisierung mit einem für Frischluft teilweise geöffneten und für Umluft geschlossenen Bypass
Figur 4
   eine erfindungsgemäße Vorrichtung zur Klimatisierung mit einem für Frischluft geöffneten und für einen Teil von Umluft geschlossenen Bypass

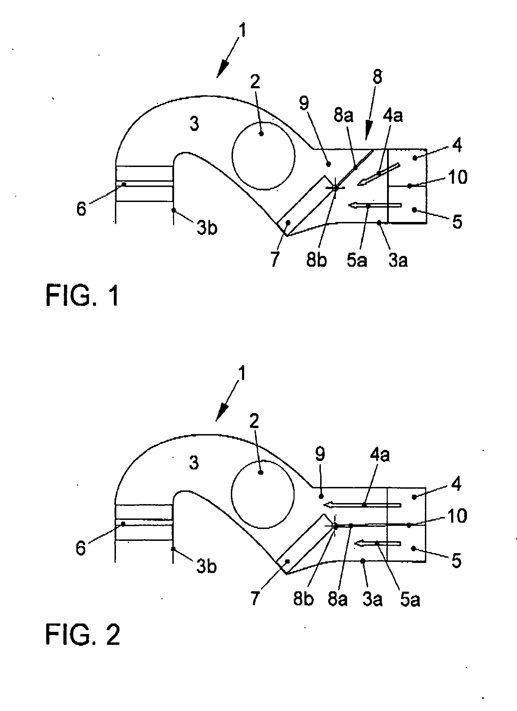

Die Figuren 1 bis 4 beziehen sich auf eine Vorrichtung 1 zur Klimatisierung eines nicht näher dargestellten Innenraums eines Fahrzeugs mit einer ansaugenden Gebläseeinrichtung 2, einem

Luftzufuhrsystem mit einem Luftzufuhrkanal 3 sowie einem Frischluftkanal 4 und einem Umluftkanal 5. Frischluftkanal.4 und Umluftkanal 5 sind jeweils mit Einlässen für Frischluft bzw. Umluft verbunden, die an geeigneten Positionen im Äußeren bzw. Inneren des Fahrzeugs angeordnet sind. Ferner sind der Frischluftkanal 4 sowie der Umluftkanal 5 mit einem vorderen Bereich 3a des Luftzufuhrkanals 3 verbunden. In der Ausführungsform der Figur 1 sind Frischluftkanal und Frischluftkanal 5 zumindest im dem Bereich, in dem diese mit dem vorderen Bereich 3a des Luftzufuhrkanals 3 verbunden sind, mittels einer Trennwand 10 voneinander abgetrennt. Ein hinterer Bereich 3b des Luftzufuhrkanals 3 ist mit einer Heizungswärmetauschereinrichtung 6, insbesondere einem Heizkondensator einer Klimaanlage des Fahrzeugs, insbesondere Im Falle des Betriebs der Klimaanlage als Wärmepumpe, verbunden. Zusätzlich oder alternativ zu diesem Heizkondensator kann aber auch ein mit Motorkühlmittel durchströmter und/oder ein elektrisch betriebener Heizkörper vorgesehen sein. Stromaufwärts der Heizungswärmetauschereinrichtung 6 ist im Luftzufuhrkanal 3 eine Temperierkomponente 7 einer Verdampfereinrichtung angeordnet. Die Temperierkomponente 7 weist, wie an sich bekannt, eine möglichst große Fläche für den Austausch zwischen einem Luftmassenstrom und einem Kältemittel auf.

Im Betrieb der erfindungsgemäßen Vorrichtung wird mittels der Gebläseeinrichtung 2 ein Luftmassenstrom in dem Luftzufuhrkanal 3 gefördert, der, wie im Weiteren noch genauer dargestellt ist, bedarfsgerecht temperiert und entfeuchtet werden kann. Es versteht sich, dass die verschiedenen Komponenten der Vorrichtung sowie ggf. der Klimaanlage des Fahrzeugs über ein Steuergerät mit dazugehörigen Sensoren, Aktuatoren und elektrischen Anschlüssen gesteuert bzw. geregelt werden kann. Eine ggf. vorgesehene Klimaanlage umfasst typischerweise einen Kompressor, optional einen Innenheizkondensator für einen Wärmepumpenbetrieb, einen vorzugsweise als Verdampfer ausgebildeten innenwärmetauscher, einen vorzugsweise als Kondensator oder Gaskühler ausgebildeten Außenwärmeübertrager, die jeweils Komponenten eines Kältemittelkreislaufs darstellen. Vorzugsweise sind die Heizungswärmetauschereinrichtung 6 sowie die Temperierkomponente 7 der Verdampfereinrichtung mit der Klimaanlage bzw. dem Kältemittelkreislauf der Klimaanlage gekoppelt.

Bei Betrieb der erfindungsgemäßen Vorrichtung wird ein aus dem Umluftkanal 5 geförderter Umluftmassenstrom 5a und/oder ein aus dem Frischluftkanal 4 geförderter Frischluftmassenstrom 4a im Luftzufuhrkanal 3 in dessen hinteren Bereich 3b transportiert.

Stromauf der Temperierkomponente 7 ist im Luftzufuhrkanal 8 eine Lufteinstelleinrichtung 8a angeordnet, mittels der der Frischluftmassenstrom 4a und/oder der Umluftmassenstrom 5a beeinflusst, insbesondere gelenkt werden kann.

Die Figuren 1 bis 4 zeigen eine Ausführungsform der Erfindung, bei der die Temperierkomponente 7 in den Luftzufuhrkanal 3 hineinragt, wobei ein Teil des Querschnitts des Luftzufuhrkanals 3 von der Temperierkomponente 7 frei bleibt bzw. von der Temperierkomponente 7 nicht ausgefüllt wird. In der Darstellung der Figur 1 ist erkennbar, dass die Temperierkomponente 7 mit einem spitzen Winkel zu einer Längsachse des vorderen Bereichs 3a Luftzufuhrkanals 3 in diesem angeordnet ist, womit eine Druckerhöhung eines die Temperierkomponente 7 beaufschlagenden Luftmassenstroms erreicht werden kann.

Da die Temperierkomponente 7 den Querschnitt des Luftzufuhrkanals 3 nicht vollständig ausfüllt, ist durch den nicht ausgefüllten Teil des Querschnitts des Luftzufuhrkanals 3 ein Bypasskanal 9 gebildet, der die Temperierkomponente 7 strömungsmäßig umgeht. Die Luftstelleinrichtung umfasst eine im Luftzufuhrkanal 3 angeordnete Klappe 8a, die um eine an der Temperierkomponente angebrachte Achse 8b schwenkbar ist. Die Achse 8b kann auch an einer anderen Position im Luftzufuhrkanal 3 angebracht sein.

In der Figur 1 ist der Bypass 9 in einem strömungsmäßig verschlossenem Zustand gebracht, wobei die Klappe 8a in eine Position versetzt ist, in der sie mit ihrem Randbereich an einen Wandbereich des Luftzufuhrkanals 3 strömungsmäßig abschließt, wobei die Temperierkomponente 7 sowohl mit einem Frischluftmassenstrom 4a als auch mit einem Umluftmassenstrom 5a beaufschlagbar ist oder beaufschlagt wird.

In der Figur 2 Ist der Bypass 9 in einen für einen Frischluftmassenstrom 4a offenen Zustand und gleichzeitig in einen für einen Umluftmassenstrom 5a geschlossenen Zustand gebracht, wobei ein ausschließlich aus dem Umluftkanal 5 geförderter Umlüftmassenstrom 5a die Temperierkomponente 7 beaufschlagt. Ein aus dem Frischluftkanal 4 beförderter Frischluftmassenstrom 4a umgeht daher strömungsmäßig die Temperierkomponente 7. Die Klappe 8a ist in der Figur 2 derart positioniert, dass sie mit der Trennwand 10 zwischen dem Frischluftkanal 4 und dem Umluftkanal 5 zusammenwirkt, dass ein Frischluftpfad gebildet ist, der vom Frischluftkanal 4 unter Umgehung der Temperierkomponente 7 sich zum Bypass 9 und durch diesen hindurch erstreckt. Gleichzeitig ist ein Umluftpfad gebildet, der sich vom Umluftkanal 5 zur Temperierkomponente 7 erstreckt, so dass ein entsprechender Umluftmassenstrom 5a die Temperierkomponente 7 beaufschlagt und eine thermische Koppelung zwischen der Temperierkomponente 7 und dem Umluftmassenstrom 5a hergestellt wird.

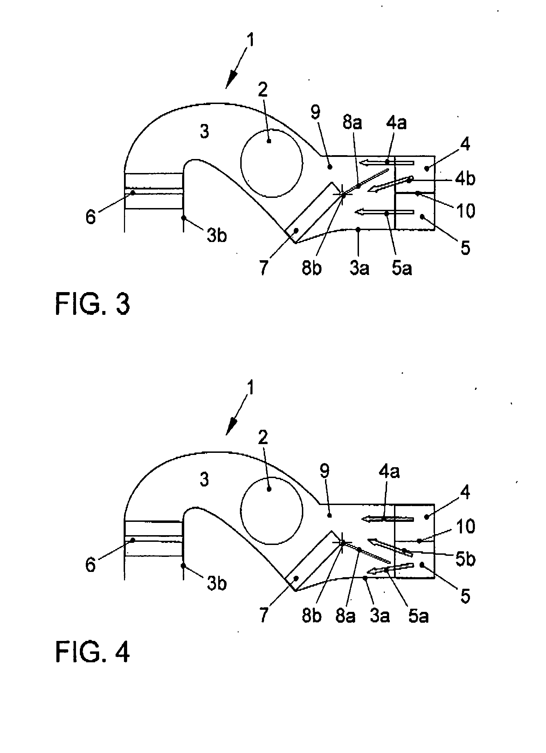

In der Figur 3 ist dargestellt, dass durch eine Positionierung der Klappe 8a in eine Zwischenposition zwischen der Position der Figur 1 und der Figur 2 der Bypasskanal 9 in einen für einen Frischluftteilmassenstrom 4a offenen Zustand bringbar ist, wobei gleichzeitig ein Frischluftteilmassenstrom 4b die Temperierkomponente 7 beaufschlagt. In diesem Zustand ist der Bypass 9 in einem für den Umluftmassenstrom 5a verschlossenen Zustand versetzt bzw. ein Umluftmassenstrom 5a wird von der Klappe 8a in dieser Position von dem Bypasskanal 9 weggelenkt.

In Figur 4 Ist die Klappe 8a derart positioniert, dass ein Umluftteilluftmassenstrom 5a die Temperierkomponente 7 beaufschlagt, während ein Umluftteilluftmassenstrom 5b zum Bypasskanal 9 gelenkt wird.

### Bezugszeichenliste

- 1: Vorrichtung zur Klimatisierung
- 2: Gebläseeinrichtung
- 3: Luftzufuhrkanal
- 3a: vorderer Bereich Luftzufuhrkanal
- 3b: hinterer Bereich Luftzufuhrkanal
- 4: Frischluftkanal
- 4a: Frischluftmassenstrom
- 4b: Frischluftteilmassenstrom
- 5: Umluftkanal
- 5a: Umluftmassenstrom
- 5b: Umluftteilmassenstrom
- 6: Heizungswärmetauschereinrichtung
- 7: Temperierkomponente .
- 8: Lufteinstelleinrichtung
- 8a: Klappe
- 8b: Achse
- 9: Bypasskanal
- 10: Trennwand

## Patentansprüche

1. Vorrichtung zur Klimatisierung eines Innenraums eines Fahrzeugs mit
- einer Luft ansaugenden Gebläseeinrichtung (2)
- einem Luftzufuhrsystem, welches mit dem Innenraum verbindbar ist und einen Luftzufuhrkanal (3) sowie zumindest einen Frischluftkanal (4) und einen Umluftkanal (5) umfasst, wobei der Frischluftkanal (4) und der Umluftkanal (5) mit einem vorderen Bereich (3a) des Luftzufuhrkanals (3) verbindbar oder verbunden sind,
- einer mit einer im hinteren Bereich (3b) des Luftzufuhrkanals (3) verbundenen oder verbindbaren Heizungswärmetauschereinrichtung (6) und
- einer stromaufwärts der Heizungswärmetauschereinrichtung (6) im Luftzufuhrkanal (3) angeordneten Temperierkomponente (7) einer Verdampfereinrichtung,
**dadurch gekennzeichnet, dass** stromaufwärts der Temperierkomponente (7) im Luftzufuhrkanal (3) eine Lufteinstelleinrichtung angeordnet ist, mittels der ein ausschließlich aus dem Umluftkanal (5) geförderter Umluftmassenstrom (5a) unter strömungsmäßiger Beaufschlagung der Temperierkomponente (7) und gleichzeitig ein zumindest teilweise aus dem Frischluftkanal (4) geförderter Frischluftmassenstrom (4a) unter strömungsmäßiger Umgehung der Temperierkomponente (7) der Heizungswärmetauschereinrichtung (6) zuführbar ist.

2. Vorrichtung wie in Anspruch 1, **dadurch gekennzeichnet, dass** die Lufteinstelleinrichtung einen die Temperierkomponente (7) strömungsmäßig umgehenden Bypasskanal (9) des Luftzufuhrkanals (3) umfasst.

3. Vorrichtung nach Anspruch 2, **dadurch gekennzeichnet, dass** die Lufteinsteiieinrichtung zumindest eine im Luftzufuhrkanal (3) angeordnete verstellbare Klappe (8a) umfasst, mittels welcher der Bypasskanal (9) in einen für einen Umluftmassenstrom (5a) verschlossenen und für einen Frischluftmassenstrom (4a) offenen Zustand bringbar ist.

4. Vorrichtung nach Anspruch 3, **dadurch gekennzeichnet, dass** die Temperierkomponente (7) mit einem Frischluftteilmassenstrom (4b) beaufschlagbar ist, wobei der Bypasskanal (9) in einen für einen Umluftmassenstrom (5a) verschlossenen Zustand versetzt ist.

5. Vorrichtung nach einem der Ansprüche 3 oder 4, **dadurch gekennzeichnet, dass** mittels der Klappe (8a) der Bypasskanal (9) in einen für einen Umluftmassenstrom (5a) und für einen Frischluftmassenstrom (4a) geschlossenen Zustand bringbar ist.

6. Vorrichtung nach einem der Ansprüche 3 bis 5, **dadurch gekennzeichnet, dass** mittels der Klappe (8a) der Bypasskanal (9) in einen für einen Umluftteilmassenstrom (5b) und für einen Frischluftmassenstrom (4a) offenen Zustand bringbar ist.

7. Vorrichtung nach Anspruch 6, **dadurch gekennzeichnet, dass** die Temperierkomponente (7) mit einem Umluftteilluftmassenstrom (5a) beaufschlagbar ist, wobei die Temperierkomponente (7) von einem aus dem Frischluftkanal (4) gefördertem Frischluftmassenstrom (4a) nicht beaufschlagbar ist.

8. Vorrichtung nach einem der vorhergehenden Ansprüche, **dadurch gekennzeichnet, dass** die Gebläseeinrichtung (2) im Luftzufuhrkanal (3) stromabwärts oder stromaufwärts der Temperierkomponente (7) angeordnet oder anordenbar ist.

9. Vorrichtung nach einem der vorhergehenden Ansprüche 3 bis 7, **dadurch gekennzeichnet, dass** die Gebläseeinrichtung (2) eine erste im Frischluftkanal (4) und/oder eine zweite im Umluftkanal (5) angeordnete Gebläsekomponente aufweist.

10. Verfahren zur Klimatisierung eines Innenraums eines Fahrzeugs mittels
- einer Luft ansaugenden Gebläseeinrichtung (2)
- eines Luftzufuhrsystems, welches mit dem Innenraum verbindbar ist und einen Luftzufuhrkanal (3) sowie zumindest einen Frischluftkanal (4) und einen Umluftkanal (5) umfasst, wobei der Frischluftkanal (4) und der Umluftkanal (5) mit einem vorderen Bereich (3a) des Luftzufuhrkanals (3) verbindbar oder verbunden sind,
- einer mit einer im hinteren Bereich (3b) des Luftzufuhrkanals (3) verbundenen oder verbindbaren Heizungswärmetauschereinrichtung (6) und
- einer stromaufwärts der Heizungswärmetauschereinrichtung (6) im Luftzufuhrkanal (3) angeordneten Temperierkomponente (7) einer Verdampfereinrichtung
**dadurch gekennzeichnet, dass** mittels einer stromaufwärts der Temperierkomponente (7) im Luftzufuhrkanal (3) angeordneten Lufteinstelleinrichtung ein ausschließlich aus dem Umluftkanal (5) geförderter Umluftmassenstrom (5a) unter strömungsmäßiger Beaufschlagung der Temperierkomponente (7) und gleichzeitig ein zumindest teilweise aus dem Frischluftkanal (4) geförderter Frischluftmassenstrom (4a) unter strömungsmäßiger Umgehung der Temperierkomponente (7) der Heizungswärmetauschereinrichtung (6) zugeführt wird.
